# EUROPÄISCHE PATENTSCHRIFT

(11) **EP 1 132 702 B1**
(45) Veröffentlichungstag und Bekanntmachung des Hinweises auf die Patenterteilung: **12.04.2006**
(21) Anmeldenummer: 01100863.8
(22) Anmeldetag: 16.01.2001
(51) Int. Cl.: F26B 13/00, F26B 13/20

(54) **Verfahren zum Führen einer Warenbahn und Wärmebehandlungsvorrichtung**
Process for guiding a web and heat treatment apparatus
Procédé pour le guidage d'une bande et dispositif de traitement thermique

(30) Priorität: 16.02.2000 DE 10007004
(43) Veröffentlichungstag der Anmeldung: 12.09.2001
(73) Patentinhaber: LINDAUER DORNIER GESELLSCHAFT M.B.H, 88129 Lindau (DE)
(72) Erfinder: Rutz, Andreas, Dr., 88131 Lindau (DE)

(56) Entgegenhaltungen:
- EP-A- 0 196 107
- EP-A- 0 721 095
- EP-A- 0 770 731
- WO-A-95/14199
- DE-A- 1 729 274
- DE-A- 1 729 490
- DE-A- 3 140 935
- DE-A- 3 501 684
- DE-B- 1 299 667
- FR-A- 2 392 818
- US-A- 3 559 301
- US-A- 4 575 952
- US-A- 4 591 517

## Beschreibung

Die Erfindung betrifft eine Wärmebehandlungsvorrichtung für vorzugsweise dichte Warenbahnen, insbesondere zu Folien verstreckbare thermoplastische Warenbahnen mit oberhalb und unterhalb der Warentransportebene angeordneten Mitteln zur Ausbildung des Ein- und Ausgangsspaltes der Wärmebehandlungsvorrichtung.

Bei thermischen Behandlungsprozessen, bei denen die Warenbahnen, wie z.B. zu Folien verstreckbare thermoplastische Warenbahnen, durch Wärmebehandlungsvorrichtungen hindurchgeführt werden müssen, tritt an dem Ein- und Ausgangsspalt der Wärmebehandlungsvorrichtung durch einströmende Kaltluft und ausströmende erwärmte Prozessluft ein unerwünschter Energieverlust auf.
Dieser Energieverlust hängt im wesentlichen von der vertikalen Ausdehnung des Ein- und Ausgangsspaltes und von der Geschwindigkeit ab, mit der die Warenbahn in die Wärmebehandlungsvorrichtung hinein- und herausgeführt wird.
Die Energieverluste sind ferner von den vorherrschenden Druckunterschieden zwischen dem Innenraum der Wärmebehandlungsvorrichtung und deren atmosphärischer Umgebung abhängig, also der innerhalb der Wärmbehandlungsvorrichtung erzeugte Druck wird einem Ausgleich zu dem atmosphärischen Druck suchen, wodurch ständig Heissluft über den Ein- und Ausgangsspalt entweicht.
Verständlicherweise verstärkt sich der Energieverlust mit der Größe des Ein- und Ausgangsspaltes sowie mit zunehmender Warentransportgeschwindigkeit.
Die Breite des Ein- und Ausgangsspaltes ist durch die Breite der Warenbahn bzw. durch die zu erzielende Breite der Warenbahn vorbestimmt, so dass auf die eventuell dadurch entstehenden Energieverluste hier nicht näher eingegangen wird.

Die Höhe, also die vertikale Ausdehnung des Ein- und Ausgangsspaltes, ist beeinflussbar, wie aus einer Reihe derartiger Lösungen bekannt ist.

Bekannt ist z.B., dass durch eine entsprechende Drucksteuerung oder -regelung innerhalb einer Wärmebehandlungsvorrichtung, z.B. durch einen geringen Unterdruck relativ zu dessen Umgebung, Energieverluste aufgrund der statischen Druckdifferenzen vermieden werden. Nachteilig dabei ist, dass Umgebungsluft, die weit unter der Temperatur der Prozessluft liegt, in die Behandlungsvorrichtung gesogen wird. Die Menge der eingesogenen Luft muss dann auch gezielt aus der Behandlungsvorrichtung entnommen werden, um die Behandlungsvorrichtung auf dem Unterdruckniveau zu halten. Gleichzeitig muss Energie zugeführt werden, um die einströmende relativ kalte Umgebungsluft auf ein Temperaturniveau anzuheben, damit der Wärmebehandlungsprozess innerhalb der Wärmebehandlungsvorrichtung nicht gestört ist.
Bei entsprechend hohen Temperaturen von etwa 240°C, wie diese z.B. bei der Behandlung von Polyester-Folie erforderlich sind, kann die laufende Energiezufuhr zu einem erheblichen Energieverbrauch führen.

Die dynamischen Energie-Verluste, die aufgrund der durch die Transportgeschwindigkeit mitgerissenen Luftmengen entstehen, können dagegen nicht durch einen Unterdruck in der Behandlungskammer vermieden werden. Hierzu sind andere Mittel erforderlich.

Eine Möglichkeit besteht darin, den Ein- und Ausgangsspalt soweit als möglich einzuengen. Dazu werden beispielsweise Abschottungen ober- und unterhalb der Warenbahn über der gesamten Breite der Behandlungsvorrichtung angebracht. Diese Abschottungen können als Einhängebleche oder Klappen mit den unterschiedlichsten Formen ausgeführt werden. Die Abschottungen reduzieren den offenen Spalt in der Höhe. Dies geht jedoch nur effektiv in dem Maße, wie die Warenbahn stabil in der Warenbahntransportebene bleibt. Bei sehr breiten Warenbahnen kommt es entweder zum Durchhängen (schwere, biegeschlaffe Materialien) oder bei sehr dünnen Materialien, die nicht ausreichend gespannt werden können, zum Flattern oder zum Ausbauchen.

Warenbahnen mit derartigen Eigenschaften kommen dann in Berührungskontakt mit den Abschottungen. Der Berührungskontakt führt zur Beschädigung der Warenbahn oder zum Reißen derselben.
Eine gerissene Warenbahn wiederum führt zur Unterbrechung des Behandlungsprozesses, was unerwünschte Folgeerscheinungen auslöst.

Eine andere Möglichkeit Energieverluste zu vermeiden, ist die Verwendung von Luftschleusen. Dazu wird der Ein- und Ausgangsspalt durch einen ober- und unterhalb der Warenbahn erzeugten und mehr oder weniger senkrecht auf die Warenbahn gerichteten Luftstrom gegen ein- oder ausströmende Luftmengen abgeschottet. Nachteil ist hier, dass die der Abschottung dienenden zusätzlichen Luftmengen aus der Behandlungsvorrichtung wieder entnommen werden müssen, sofern sie in die Behandlungsvorrichtung eingesogen werden.

Der Abstand, der zum Aufbringen des Luftvorhanges erforderlichen Düsen zur Warenbahn muss aus oben beschriebenen Gründen ausreichend groß sein. Eine Berührung der Warenbahn muss unbedingt vermieden werden. Dies bedeutet, dass eine ausreichend hohe Luftgeschwindigkeit bei ausreichendem Luftvolumen vorhanden sein muss, um überhaupt eine wirksame Abtrennung zu erreichen. Nachteilig wirken sich dann Turbulenzen in der Warenebene aus, die zum Flattern der Warenbahn führen können. Ein unruhiger Warenlauf wirkt sich speziell bei empfindlichen Bahnen nachteilig auf die Prozesssicherheit aus.

Aus EP 0 196 107 A2 ist ein Warenbahntrockner bekannt, umfassend eine von einem Gehäuse umschlossenen Trocknerkammer, die über Düsenanordnungen in der Kammer mit Trocknungsluft versorgt wird.
Die Warenbahn wird durch enge Eintritts- und Austrittsschlitze in der Wand des Gehäuses durch die Trocknerkammer bewegt. Die Luftströmung der Düsenanordnung am Eintrittsschlitz des Warenbahntrockners erfolgt in Warenlaufrichtung, während sie am Austrittsschlitz der Warenlaufrichtung entgegengerichtet ist.
Spezielle Abdeckungen an den Ein- und Ausgangsschlitz zur Reduzierung des Abfließens von Wärmeenergie sind nicht vorgesehen. Damit kann in nachteiliger Art und Weise Kaltluft über den Eintrittsschlitz aus der Umgebung des Warenbahntrockners angesaugt werden.

Diese Saugluft ist auf ein Temperaturniveau anzuheben, damit der Wärmebehandlungsprozess der Warenbahn nicht gestört wird.
Ein weiterer Nachteil des bekannten Warenbahntrockners besteht darin, dass aufgrund der Düsenanordnungen die Kraftwirkung der Luftströmungen auf die Warenbahn deren stabile Führung in einer Ebene nicht erlaubt.

Zum Führen einer in Längsrichtung bewegten Warenbahn durch Luftströmung ist ferner aus US 3,559,301 ein Warenbahntrockner bekannt, der ebenfalls eine von einem Gehäuse umschlossene Trocknerkammer besitzt, die über Düsenanordnungen in der Kammer mit Trockenluft versorgt wird.
Die Warenbahn wird auch hier durch enge Eintritts- und Austrittsschlitze in der Wand des Gehäuses durch die Trockenkammer bewegt.
Die Luftströmung der Düsenanordnung am Eintritts- und Austrittsschlitz kann in Warenlaufrichtung oder der Warenlaufrichtung entgegengerichtet sein.
In jedem Fall soll die Luftströmung dieser Düsen die Warenbahn während sie durch die Trocknerkammer geführt wird in der Schwebe halten.
In der vorbekannten US 3,559,301 wird nicht offenbart, wie die Warenbahn im Bereich des Ein- und Austrittsschlitzes derart in einer definierten Ebene geführt werden kann, dass ein Berührungskontakt zwischen Warenbahn und den mechanischen Abschottmitteln ausgeschlossen wird.
Es wird ferner nicht offenbart, dass Abschottmittel den Ein- und Austrittsschlitz bilden, mit denen der Abfluss von Wärmeenergie minimiert werden kann.

Aufgabe der Erfindung ist es, die Nachteile des Standes der Technik weitgehendst zu vermeiden. Dabei sind im Bereich des Ein- und Ausgangsspaltes einer Warenbahnbehandlungsvorrichtung solche Bedingungen zu schaffen, dass bei minimalem Abfluss von Wärmeenergie (Heissluft) über den Ein- und Ausgangsspalt ein Berührungskontakt zwischen der Warenbahn und den mechanischen Abschottmitteln weitgehendst ausgeschlossen wird.
Auszuschließen sind technische Lösungen, die die Warenbahn über Walzen führen.

Die Aufgabe wird erfindungsgemäß durch die Merkmale des Patentanspruches 1 gelöst. Danach ist es erfindungswesentlich, dass die untere Spaltabdeckung eine kastenähnliche, über die Breite der Warenbahn reichende, im wesentlichen rechteckig ausgebildete strukturelle Einheit mit folgenden Merkmalen umfasst:
- die der Warenbahnebene gegenüberliegende Oberfläche der strukturellen Einheit besitzt eine nach außen gewölbte Kontur, in Art der Kontur der Oberfläche eines Flugzeugtragflügels,
- die Oberfläche bildet einen transversal auf die Warentransportebene gerichteten, düsenähnlichen Luftaustrittsschlitz aus,
- die Oberfläche verjüngt den Abstand zur Warenbahntransportebene in Richtung des spaltförmigen Ein- und Ausgangs bis auf einen vorgebbaren Abstand und
- die Oberfläche erstreckt sich zuströmseitig und abströmseitig der Behandlungsvorrichtung über die Breite des durch die obere Spaltabdeckung bestimmten Eingangs- und Ausgangsspaltes hinaus.

Wichtig ist, dass zur Ausbildung einer laminaren Luftströmung diese über einen Luftaustrittsschlitz an der vorher erwähnten Oberflächenkontur entlang geführt wird, und zwar bereits innerhalb der strukturellen Einheit, indem die Strömungsoberfläche eines ersten Luftleitbleches unter Ausbildung des Luftaustrittsschlitzes von einem zweiten Luftleitblech überlappt wird. Auf diese Weise bildet sich erfindungsgemäß ein Luftpolster zwischen der Oberfläche des ersten Luftleitbleches und der Warenbahn aus.
Ein Abreißen der Strömung ist nicht zu befürchten, weil Hindernisse zwischen der Strömungsoberfläche und der Warenbahn nicht vorhanden sind.
Entsprechend der Position des Luftaustrittsschlitzes und des ersten Luftleitbleches sowie der Geschwindigkeit der aus dem Luftaustrittsschlitz austretenden Luftströmung wird die Warenbahn in vorteilhafter Weise in einem definierbaren Abstand zwischen der oberen Spaltabdeckung und dem ersten Luftleitblech der strukturellen Einheit geführt.
Flatterbewegungen, Ausbauchungen und Durchhänger in der Warenbahn werden im Bereich des Ein- und Ausgangsspaltes der Behandlungsvorrichtung unterbunden.
In vorteilhafter Weise ist es nunmehr erfindungsgemäß möglich, die obere Spaltabdeckung sehr nahe an die Warenbahnebene heranzuführen, ohne dass Beschädigungen der Ware zu befürchten wären.

In weiterer Ausgestaltung der Merkmale nach Anspruch 1 ist die strukturelle Einheit in einen Druckraum und einen Saugraum unterteilt.
Im Bereich des sich entspannenden Luftpolsters besitzt der Saugraum in seiner nach außen gerichteten Wandung Saugöffnungen.
Der Druckraum und der Saugraum ist über Leitungen mit einem Ventilator verbunden, der in dem Druckraum einen Überdruck und in dem Saugraum einen Unterdruck erzeugt.
Die Regelung des Luftstromes kann dabei über die Drehzahleinstellung des verwendeten Ventilators erfolgen, sofern eine getrennte Luftversorgung vorgesehen ist.
Ist eine Drehzahlregelung nicht vorgesehen, so kann das Luftvolumen durch die Drosselung des Ansaugstromes des Ventilators mit Hilfe geeigneter Stellorgane eingestellt werden.

Die strukturelle Einheit ist ferner wenigstens vertikal zur Warenbahnebene verstellbar ausgebildet. Damit kann zum einen die Dicke des Luftpolsters vorbestimmt und zum anderen kann die gesamte Einheit bei Betriebsstörungen aus der Warenbahnebene herausbewegt werden, um so Beschädigungen an der Ware sowie an der Einheit selbst zu vermeiden.
Die Einbaulage der Ausblasdüse ist frei wählbar.
Aufgrund der entstehenden dynamischen Effekte beim Ausbilden des Luftpolsters kann die strukturelle Einheit sowohl ober- wie auch unterhalb der Warenbahnebene angeordnet sein. Vorzugsweise jedoch sollte die Einheit unterhalb der Warenbahnebene angeordnet sein, weil im Falle von Betriebsstörungen die Einheit auch ohne nennenswerte Fremdenergie, nämlich aufgrund ihrer Schwerkraft, nach unten gefahren werden kann.

Im Bereich oberhalb der Warenebene kann eine Spaltabdeckung in Form einer schwenkbaren Klappe im Normalbetrieb ohne Hilfsenergie (wieder aufgrund der Schwerkraft) eine stabile Lage einnehmen.
Zum Öffnen können unterschiedlichste mechanische Vorrichtungen verwendet werden (Seilzug, Hebel usw.), die die erforderliche Schwenkbewegung realisieren. Die Betätigung kann dabei manuell, hydraulisch, mechanisch usw. erfolgen.

Über einen in dem Schwenkmechanismus eingebauten Freilauf in Warenrichtung kann die Klappe bei auftretenden Stößen in Warenrichtung frei nachgeben.

Um mit dem zur Erzeugung des Unterdrucks und des Luftpolsters nötigen Luftvolumen die Luftbilanz der Behandlungsvorrichtungen und eventuell der Umgebung nicht zu stören, kann der Luftstrom im rückwärtigen Teil der Behandlungsvorrichtung wieder abgesaugt werden, nachdem die Luft den Spalt zwischen der Ware und der Abweisfläche verlassen hat. Damit wird ein geschlossener, völlig unabhängiger Luftkreislauf realisiert.

Die Absaugung ist so vorgesehen, dass sie die eigentliche Funktion der Behandlungseinrichtung nicht stört und betriebssicher ist. Vorgesehen ist, die Luft über eine Absaugung, die nahezu im rechten Winkel zur Warenebene steht, abzusaugen. Damit kann der Bereich nicht durch kleinere eventuell vorhandene Warenpartikel oder sonstige Verschmutzungen verstopfen und damit die Funktion des Gesamtsystems stören.

Die Erfindung wird nachstehend anhand eines Ausführungsbeispiels näher erläutert.

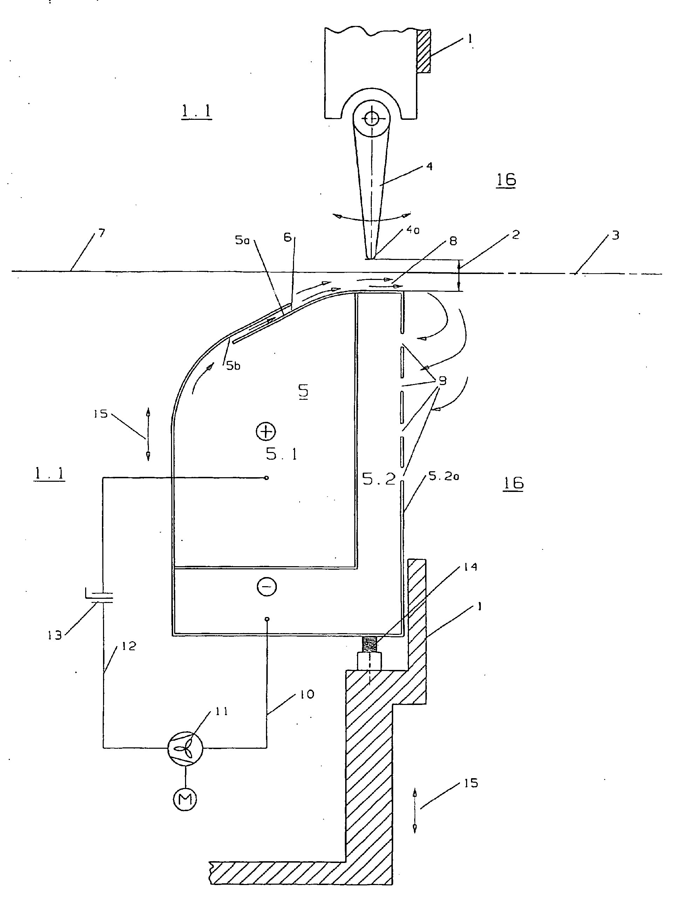

Die Zeichnung zeigt die strukturelle Einheit mit den in den Patentansprüchen 1 bis 7 erfindungsgemäß angegebenen Merkmalen innerhalb einer Wärmebehandlungsvorrichtung.

Die Figur zeigt den Ausgangsbereich einer im Detail nicht dargestellten Wärmebehandlungsvorrichtung 1. Die Bezugszeichen 1.1 weisen auf den Innenraum der Wärmebehandlungsvorrichtung 1 hin, während die Bezugszeichen 16 auf die ausgangsseitige Umgebung der Wärmebehandlungsvorrichtung 1 Bezug nehmen.

Über die Breite der Warentransportebene 3 ist in der Behandlungsvorrichtung 1 der Ausgangsspalt 2 ausgebildet.
Die Warentransportebene 3 liegt hier etwa mittig zwischen dem freien Ende 4a der als schwenkbewegliche Klappe ausgebildeten oberen Spaltbegrenzung 4 und einem etwa parallel zur Transportebene 3 verlaufenden Abschnitt eines ersten Luftleitbleches 5a der strukturellen Einheit 5, das die untere Spaltbegrenzung ausbildet.

Die strukturelle Einheit 5 ist in Art eines Kastens gestaltet, der, wie die obere Spaltbegrenzung 4, über die Breite der herzustellenden Warenbahn 7 reicht.
Die der Warentransportebene 3 gegenüberliegende Fläche der strukturellen Einheit bildet das erste Luftleitblech 5a, das erfindungsgemäß eine nach außen gewölbte Kontur in Art der Oberfläche eines Flugzeugtragflügels besitzt, und ein zweites Luftleitblech 5b, dass den freien Endabschnitt des ersten Luftleitbleches 5a unter Bildung einer Art Luftaustrittsdüse 6 beabstandet überlappt.
Die Außenkontur des ersten Luftleitbleches 5a verjüngt dabei den Abstand zwischen dessen Oberfläche und der Warentransportebene 3 derart, dass sich zwischen einer in der Warentransportebene 3 geführten Warenbahn 7 und dem Luftleitblech 5a ein laminares Luftpolster 8 ausbildet, welches die Warenbahn 7 beim Verlassen des Innenraums 1.1 der Behandlungsvorrichtung 1 trägt.

Die strukturelle Einheit 5 ist in Ausgestaltung der Erfindung in eine Überdruckkammer 5.1 und eine Unterdruckkammer 5.2 unterteilt. Die Luftaustrittsdüse 6 ist verständlicherweise Bestandteil der Überdruckkammer 5.1. Die Unterdruckkammer 5.2 besitzt auf der außerhalb der Wärmebehandlungsvorrichtung 1 in einer vertikal verlaufenden Außenwand 5.2a mehrere Rücksaugöffnungen 9, über welche die Luft des sich entspannenden Luftpolsters 8 angesogen wird, und zwar durch die Saugwirkung des mit der Unterdruckkammer 5.2 über die Leitung 10 verbundenen Ventilators 11.

Der Ventilator 11 steht ausgangsseitig über die Leitung 12, in der gegebenenfalls ein Luftmengenregelorgan 13 eingebunden sein kann, mit der Druckkammer 5.1 in Verbindung. Damit ist zwischen der Druckkammer 5.1 mit der Luftaustrittsdüse 6 und der Saugkammer 5.2 mit Rücksaugöffnungen 9, dem Ventilator 11 und zugehörigen Leitungen 10, 12 ein geschlossener, von dem Innenraum 1.1 der Wärmebehandlungsvorrichtung 1 unabhängiger Luftkreislauf geschaffen, der die Energiebilanz der Wärmebehandlungsvorrichtung nicht im negativen Sinne beeinflusst.

Die strukturelle Einheit 5 ist über geeignete Stellmittel 14 in Richtung des Doppelpfeils 15 relativ zur Warentransportebene 3 einstellbar, womit auf die optimale Ausbildung des Luftpolsters 8 Einfluss genommen wird.
Auch eine vertikale Verstellung des unteren Teils der Wärmebehandlungsvorrichtung 1 selbst in Richtung des Doppelpfeils 15 ist denkbar.

### Die Arbeitsweise der Wärmebehandlungsvorrichtung ist wie folgt:

Innerhalb der Wännebehandlungsvorrichtung, und zwar im Bereich des spaltförmigen Ein- und Ausgangs zwischen wenigstens der unteren Spaltabdeckung und der Warenbahn, wird eine laminare Luftströmung erzeugt. Die Luftströmung baut zwischen der Warenbahn und einem die laminare Strömung führenden Mittel ein Luftpolster auf, wobei das Luftpolster über wenigstens einen festlegbaren Längenbereich vor und nach dem Ein- und Ausgang der Wärmebehandlungsvorrichtung aufrechterhalten wird, und wonach sich das Luftpolster vor dem Eingangsspalt und nach dem Ausgangsspalt entspannt und als entspannte Luft in die Wärmebehandlungskammer oder in eine geeignete Einrichtung in der Wärmebehandlungskammer gesaugt wird.

Des Weiteren ist vorgesehen, dass die das Luftpolster ausbildende Luftströmung die Warenbahn wahlweise in einem vorbestimmten spitzen Winkel zur Warenbahnebene oder parallel zur Warenbahnebene anströmt.
Ferner ist vorgesehen, dass das Luftspolster quer zur Transportrichtung und über die Breite der Warenbahn ausgebildet wird, dass die das Luftpolster bestimmenden Parameter stufenlos einstellbar sind und dass die Dicke des Luftpolsters der Minimierung der Öffnung des Ein- und Ausgangsspaltes dient.

Die laminare Luftströmung bildet sich dabei dadurch aus, dass diese auf der der Warenbahn abgewandten Seite an einem Profil mit nach außen gewölbter Kontur, ähnlich dem Profil eines Flugzeugtragflügels, entlanggeblasen wird.
Dieses Profil leitet den Luftstrom so, dass dieser auf der der Warenbahn abgewandten Seite nicht ausweichen kann. Es kommt so zwischen der Warenbahnunterseite und der Kontur des Profils zu einer Art Coanda effect.
Durch die relativ hohe Luftgeschwindigkeit sorgt der Luftstrahl, der an der Oberfläche des Profils entlang strömt, - vergleichbar dem Auftrieb an einem Flugzeugtragflügel - für den Aufbau eines Unterdruckes relativ zur gegenüberliegenden Seite der Warenbahn. Dadurch wird die Warenbahn in Richtung der Beblasungsdüse gezogen.

### ZEICHNUNGS-LEGENDE

- 01: Wärmebehandlungsvorrichtung
- 01.1: Behandlungsraum
- 02: Ausgangsspalt
- 03: Warentransportebene
- 04: obere Spaltbegrenzung
- 04a: freies Ende
- 05: strukturelle Einheit
- 05.1: Überdruckkammer
- 05.2: Unterdruckkammer
- 05.2a: Außenwand
- 05a: Luftleitblech
- 05b: Luftleitblech
- 06: Luftaustrittsdüse
- 07: Warenbahn
- 08: Luftpolster
- 09: Rücksaugöffnung
- 10: Leitung
- 11: Ventilator
- 12: Leitung
- 13: Luftmengenregelorgan
- 14: Mittel
- 15: Doppelpfeil
- 16: Umgebung

## Patentansprüche

1. Wärmebehandlungsvorrichtung für vorzugsweise dichte Warenbahnen, insbesondere zu Folien verstreckbare thermoplastische Warenbahnen, mit einer Behandlungskammer, welche einen spaltförmigen Warenbahneingang und einen spaltförmigen Warenbahnausgang besitzt, wobei der spaltförmige Ein- und Ausgang von jeweils einer oberhalb der Warentransportebene angeordneten, relativ zur Warentransportebene einstellbaren Spaltabdeckung und aus jeweils einer unterhalb der Warentransportebene angeordneten, relativ zur Warentransportebene einstellbaren Spaltabdeckung besteht, **dadurch gekennzeichnet, dass** wenigstens die untere Spaltabdeckung eine kastenähnliche, über die Breite der Warenbahn (7) reichende strukturelle Einheit (5) umfasst,
- deren der Warenbahnebene (3) gegenüberliegende Oberfläche eine nach außen gewölbt ausgebildete Kontur in Art der Kontur der Oberfläche eines Flugzeugtragflügels besitzt,
- deren Oberfläche einen transversal auf die Warentransportebene (3) gerichteten düsenähnlichen Luftaustrittsschlitz (6) ausbildet,
- deren Oberfläche den Abstand zur Warenbahntransportebene in Richtung des spaltförmigen Ein- und Ausgangs (2) bis auf einen vorgebbaren Abstand verjüngt,
- deren Oberfläche sich zuströmseitig und abströmseitig der Behandlungsvorrichtung (1) über die Breite des durch die obere Spaltbegrenzung (4) bestimmten Ein- und Ausgangsspaltes hinaus erstreckt.

2. Wärmebehandlungsvorrichtung nach Anspruch 1, **dadurch gekennzeichnet, dass** der Luftaustrittsschlitz (6) von einander überlappenden Luftleit-Blechen (5a,5b) der strukturellen Einheit (5) gebildet ist.

3. Wärmebehandlungsvorrichtung nach Anspruch 1, **dadurch gekennzeichnet, dass** die strukturelle Einheit (5) in einen Druckraum (5.1) und in einen Saugraum (5.2) unterteilt ist.

4. Wärmebehandlungsvorrichtung nach Anspruch 3, **dadurch gekennzeichnet, dass** der Saugraum (5.2) zumindest im Bereich des sich entspannenden Luftpolsters (8) Saugöffnungen (9) besitzt.

5. Wärmebehandlungsvorrichtung nach Anspruch 1, **dadurch gekennzeichnet, dass** der Saugraum (5.2) und der Druckraum (5.1) über Leitungen (10;12) mit einem Überdruck und Unterdruck erzeugenden Mittel (11) wirkverbunden ist.

6. Wärmebehandlungsvorrichtung nach Anspruch 5, **dadurch gekennzeichnet, dass** in die Überdruckleitung (12) ein Luftmengenregelorgan (13) eingebunden ist.

7. Wärmebehandlungsvorrichtung nach Anspruch 1, **dadurch gekennzeichnet, dass** die strukturelle Einheit (5) zur Ausführung von zumindest vertikaler Stellvorgänge Stellmittel (14) besitzt.

## Claims

1. Heat-treating apparatus for preferably dense material webs, especially thermoplastic material webs stretchable to films, having a treatment chamber with a gap-form material web entrance and a gap-form material web exit, the gap-form entrance and exit comprising a respective gap cover arranged above the material transport plane and adjustable relative to the material transport plane and a respective gap cover arranged below the material transport plane and adjustable relative to the material transport plane, **characterised in that** at least the lower gap cover comprises a box-like structural unit (5) extending across the width of the material web (7),
- the surface of which structural unit opposite the plane (3) of the material web has an outwardly curved contour in the manner of the contour of the surface of an aircraft aerofoil,
- the surface of which structural unit forms a nozzle-like air exit slot (6) directed transversely onto the material transport plane (3),
- the surface of which structural unit reduces the spacing to the material web transport plane in the direction of the gap-form entrance and exit (2) to a pre-determinable spacing,
- the surface of which structural unit upstream and downstream of the treating apparatus (1) extends across the width of the entrance and exit gap defined by the upper gap limitation (4).

2. Heat treating apparatus according to claim 1, **characterised in that** the air exit slot (6) is formed by overlapping air guide sheet metal members (5a, 5b) of the structural unit (5).

3. Heat treating apparatus according to claim 1, **characterised in that** the structural unit (5) is divided into a pressure chamber (5.1) and a suction chamber (5.2).

4. Heat treating apparatus according to claim 3, **characterised in that** the suction chamber (5.2) has suction openings (9) at least in the region of the expanding air cushion (8).

5. Heat treating apparatus according to claim 1, **characterised in that** the suction chamber (5.2) and the pressure chamber (5.1) are operatively connected via lines (10; 12) to means (11) generating a positive pressure and a negative pressure.

6. Heat treating apparatus according to claim 5, **characterised in that** an air volume-regulating member (13) is integrated in the positive pressure line (12).

7. Heat treating apparatus according to claim 1, **characterised in that** the structural unit (5) has adjusting means (14) for performing at least vertical adjustment operations.

## Revendications

1. Dispositif de traitement thermique pour des bandes de tissu de préférence étanches, notamment pour des bandes de tissu thermoplastiques pouvant être étirées pour former des feuilles, comprenant une chambre de traitement, laquelle possède un orifice d'admission de bande de tissu en forme de fente et un orifice de sortie de bande de tissu en forme de fente, les orifices d'admission et de sortie en forme de fente étant constitués par respectivement un recouvrement de fente pouvant être réglé par rapport au plan de transport du tissu, disposé au-dessus du plan de transport du tissu, et d'un recouvrement de fente pouvant être réglé par rapport au plan de transport du tissu, disposé au-dessous du plan de transport du tissu, **caractérisé en ce qu'**au moins le recouvrement inférieur de la fente comporte une unité structurelle (5) en forme de caisse, parvenant sur la largeur de la bande de tissu (7),
- dont la surface opposée au plan de la bande de tissu (3) possède un contour conçu en étant courbé vers l'extérieur à la façon du contour de la surface d'une demi-voilure d'avion,
- dont la surface forme une fente de sortie d'air (6) du type buse orientée transversalement au plan de transport du tissu (3),
- dont la surface rétrécit l'écart par rapport au plan de transport de la bande de tissu en direction des orifices d'admission et de sortie (2) en forme de fente jusqu'à un écart pouvant être prédéfini,
- dont la surface s'étend côté admission et côté évacuation du dispositif de traitement (1) au-delà de la largeur des fentes d'admission et de sortie définies par la délimitation supérieure de fente (4).

2. Dispositif de traitement thermique selon la revendication 1, **caractérisé en ce que** la fente de sortie d'air (6) est formée par des tôles de guidage d'air (5a, 5b) de l'unité structurelle (5) se chevauchant.

3. Dispositif de traitement thermique selon la revendication 1, **caractérisé en ce que** l'unité structurelle (5) est divisée en une chambre de pression (5.1) et en une chambre d'aspiration (5.2).

4. Dispositif de traitement thermique selon la revendication 3, **caractérisé en ce que** la chambre d'aspiration (5.2) possède des ouvertures d'aspiration (9) au moins dans la zone du coussin d'air (8) se relâchant.

5. Dispositif de traitement thermique selon la revendication 1, **caractérisé en ce que** la chambre d'aspiration (5.2) et la chambre de pression (5.1) sont en liaison fonctionnelle avec des moyens (11) générant une surpression et une dépression par l'intermédiaire de conduites (10 ; 12).

6. Dispositif de traitement thermique selon la revendication 5, **caractérisé en ce qu'**un organe de régulation du volume d'air (13) est incorporé dans la conduite de surpression (12).

7. Dispositif de traitement thermique selon la revendication 1, **caractérisé en ce que** l'unité structurelle (5), pour réaliser des processus de réglage au moins verticaux, possède des moyens de réglage (14).
